(19) Europäisches Patentamt
European Patent Office
Office européen des brevets

(11) EP 0 844 256 B1

(12) # FASCICULE DE BREVET EUROPEEN

(45) Date de publication et mention de la délivrance du brevet:
**06.06.2001 Bulletin 2001/23**

(51) Int Cl.[7]: **C08F 4/00**, C08F 2/00

(21) Numéro de dépôt: **97402774.0**

(22) Date de dépôt: **18.11.1997**

(54) **Polymerisation en presence d'un radical libre stable et d'un iniferter**

Polymerisation in anwesenheit eines stabilen freien Radikal und ein Iniferter

Polymerization in the presence of a stable free radical and an iniferter

(84) Etats contractants désignés:
**AT BE DE ES FI FR GB IT NL SE**

(30) Priorité: **20.11.1996 FR 9614147**

(43) Date de publication de la demande:
**27.05.1998 Bulletin 1998/22**

(73) Titulaire: **Atofina**
**92800 Puteaux (FR)**

(72) Inventeurs:
- **Bertin, Denis**
  **76970 Motteville (FR)**
- **Boutevin, Bernard**
  **34090 Montpellier (FR)**
- **Nicol, Pascal**
  **64000 Pau (FR)**

(56) Documents cités:
**WO-A-94/11412**
**CH-A- 304 404**
**US-A- 2 813 849**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 844 256 B1

Printed by Jouve, 75001 PARIS (FR)

## Description

Un iniferter est une molécule pouvant générer par décomposition un radical libre, ledit radical libre pouvant initier une polymérisation ou copolymérisation, et favoriser des réactions de transfert en particulier sur l'iniferter lui-même, et des réactions de terminaison. Si l'on représente une molécule d'iniferter par A — B et une molécule de monomère polymérisable par voie radicalaire par X, les réactions mises en jeu dans le milieu de polymérisation sont en particulier les suivantes :

- formation de radicaux à partir de l'iniferter :

$$A - B \rightarrow A^{\bullet} + B^{\bullet} \quad (1)$$

- initiation de la polymérisation :

$$A^{\bullet} + X \rightarrow AX^{\bullet}\text{, puis} \quad (2)$$

$$A\,X + X \rightarrow A\,X\,X^{\bullet},$$

  jusqu'à formation de $A(X)_nX^{\bullet}$, n étant un nombre entier non nul,
- réaction de transfert sur l'iniferter :

$$A\,(X)_nX^{\bullet} + A\,B \rightarrow A\,(X)_{n+1}\,B + A^{\bullet} \quad (3)$$

- réaction de terminaison sur un radical issu directement de l'iniferter :

$$A\,(X)_nX^{\bullet} + B^{\bullet} \rightarrow A\,(X)_{n+1}\,B \quad (4)$$

Il est admis par l'homme du métier que l'existence des réactions (1) à (4) caractérisent les iniferters. L'existence des réactions (3) et (4) conduit à la formation de chaînes courtes, et c'est pourquoi, selon l'art antérieur, les iniferters sont apparus utilisables seulement dans le cadre de la préparation d'oligomères.

Lorsqu'un iniferter est utilisé à une température à laquelle une polymérisation ou copolymérisation aurait lieu de façon sensible même en l'absence d'iniferter et d'amorceur, on obtient un polymère ou copolymère dont la distribution des masses moléculaires est très large et est bimodale, c'est-à-dire comprend deux groupes de molécules, distinctes par leurs masses moléculaires. L'existence du groupe de molécules vers les faibles masses est une conséquence de la présence de l'iniferter et des réactions (3) et (4) qu'il engendre.

L'obtention d'un polymère ou copolymère à distribution des masses moléculaires bimodale n'est généralement pas souhaitée, par exemple en raison de phénomènes de démixion susceptibles de se produire en son sein et conduisant à des hétérogénéités affectant les propriétés mécaniques du matériau final.

C'est pourquoi, selon l'art antérieur, il n'est imaginable d'utiliser un iniferter qu'à une température à laquelle aucune polymérisation n'aurait lieu de façon sensible en l'absence d'iniferter ou autre amorceur de polymérisation, c'est-à-dire généralement à moins de 100°C. C'est la raison pour laquelle, selon l'art antérieur, un iniferter n'est utilisable que dans le cadre de la préparation d'oligomères, c'est-à-dire, par exemple, de polymères dont la masse moléculaire moyenne en nombre et/ou en poids est inférieure à 10 000. Un iniferter ne doit donc pas être confondu avec un amorceur classique de polymérisation tel que par exemple l'azobisisobutyronitrile, le peroxyde de benzoyle, le peroxyde de dicumyle. De tels amorceurs classiques n'engendrent pas les réactions (3) et (4) et ne conduisent pas à la formation de polymères ou copolymères à la distribution des masses moléculaires bimodale, même lorsque la polymérisation ou copolymérisation est réalisée à une température à laquelle une polymérisation ou copolymérisation aurait lieu de façon sensible en l'absence de tout amorceur.

La demande de brevet WO 94/11412 illustre l'action de radicaux libres stables sur la polymérisation du styrène. Le brevet US 5 412 047 illustre l'action de radicaux libres stables sur la polymérisation des acrylates. Le brevet US 5 449 724 illustre l'action de radicaux libres stables sur la polymérisation de l'éthylène.

Les références suivantes peuvent également présenter un intérêt : WO 95/26987, US 4 581 429, EP 507

036, EP 418 118, EP 342 073, EP 338 918.

L'invention concerne un procédé de polymérisation ou copolymérisation d'au moins un monomère polymérisable ou copolymérisable par voie radicalaire, en présence d'un radical libre stable et d'un iniferter.

La présence du radical libre stable modifie considérablement le comportement de l'iniferter lors de la polymérisation ou copolymérisation, de sorte que les réactions indésirables (3) et (4) sont fortement réduites, voire supprimées. Il est ainsi possible de réaliser rapidement et avec un rendement élevé une polymérisation ou copolymérisation en présence d'un iniferter pour mener à un polymère ou copolymère à la polydispersité réduite et dont la distribution des masses moléculaire est monomodale, et ce, même si la polymérisation ou copolymérisation est menée à une température à laquelle une polymérisation ou copolymérisation serait observée en l'absence d'iniferter ou d'un amorceur.

L'invention est particulièrement avantageuse dans le cadre de la polymérisation ou copolymérisation des méthacrylates, laquelle est particulièrement difficile si l'on s'en tient à l'enseignement du WO 94/11412.

Il est possible de choisir un iniferter capable de se scinder en deux radicaux libres sous l'effet d'un rayonnement ultraviolet.

Par exemple, l'iniferter peut comprendre une liaison simple covalente faisant intervenir deux atomes de soufre (enchaînement disulfure), ladite liaison étant susceptible de se rompre pour former deux radicaux libres, conformément à la réaction (1), chaque atome de soufre portant un électron supplémentaire caractéristique de l'état de radical libre.

L'iniferter peut par exemple être représenté par la formule

$$R^1—S—S—R^2$$

dans laquelle les groupements R1 et R2 pouvant être identiques ou différents, représentent des radicaux pouvant être de nature très variée, et comprenant généralement au moins un atome de carbone. Par exemple, les groupements R1 et R2 peuvent être choisis parmi les radicaux alkyle, aryle, aralkyle, alkylaryle, comprenant par exemple de 1 à 30 atomes de carbone, les radicaux thiurames de formule

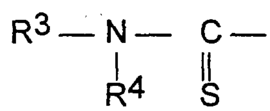

les radicaux xanthates de formule

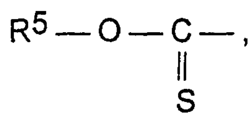

les radicaux carbamoyles de formule

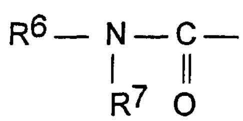

dans lesquelles $R^3$, $R^4$, $R^5$, $R^6$ et $R^7$ peuvent par exemple être choisis parmi les radicaux alkyle, aryle, aralkyle, alkylaryle, comprenant par exemple de 1 à 30 atomes de carbone.

Des exemples d'iniferters sont donnés dans les demandes de brevet EP 507 036, EP 418 118, EP 342 073, EP 338 918. L'iniferter peut également être choisi dans la liste suivante :

- disulfure de tétraéthylthiurame,
- disulfure de tétraméthylthiurame,
- disulfure de N,N'diéthyl-N,N'bis(2-hydroxyéthyl)thiurame,
- disulfure de N,N'bis(N-(2phtalimido éthyl)piperazine thiurame,
- disulfure de diisopropyl xanthate.

L'iniferter peut être introduit dans le milieu de polymérisation ou copolymérisation à raison de 0,001 % à 15 % en mole de la somme du nombre de moles de monomère et d'iniferter.

Le procédé selon l'invention fait intervenir un radical libre stable.

Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azo. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette durée moyenne de vie, les molécules du radical libre stable alternent en permanence l'état de radical et l'état de groupement lié par une liaison covalente à une chaîne de polymère. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante.

La famille des radicaux libres stables inclut les composés agissant comme inhibiteurs de polymérisation radicalaire, les radicaux nitroxydes stables c'est-à-dire comprenant le groupement =N-O• tels que les radicaux représentés par les formules suivantes:

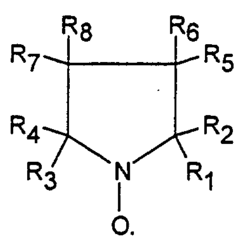
,
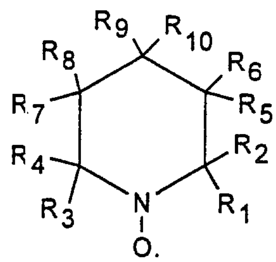
,
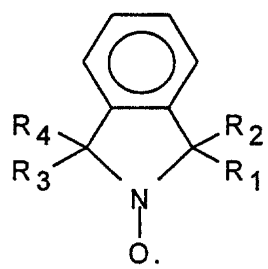
,
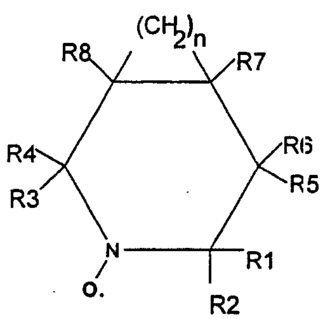
,
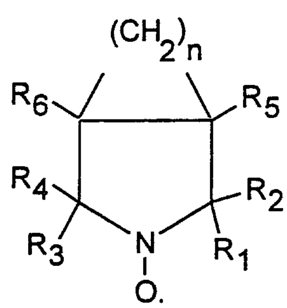
,
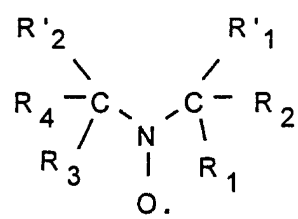

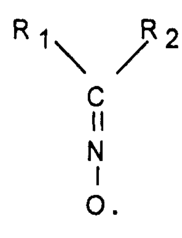
,

dans lesquelles R1, R2, R3, R4, R'1 et R'2 pouvant être identiques ou différents représentent un atome d'halogène tel que le chlore, le brome ou l'iode, un groupement hydrocarboné linéaire, ramifié ou cyclique, saturé ou insaturé tels qu'un radical alkyle ou phényle, ou un groupement ester -COOR ou un groupement alcoxyle -OR, ou un groupement phosphonate $-PO(OR)_2$, ou une chaîne de polymère pouvant par exemple être une chaîne de polyméthacrylate de méthyle, de polybutadiène, de polyoléfine comme de polyéthylène ou de polypropylène, mais étant de préférence une

chaîne de polystyrène, et dans' lesquelles R5, R6, R7, R8, R9 et R10, pouvant être identiques ou différents, peuvent être choisis dans la même famille de groupement que celle qui vient d'être envisagée pour R1, R2, R3, R4, R'1 et R'2, et de plus peuvent représenter un atome d'hydrogène, un groupement hydroxyde -OH, un groupement acide tel que -COOH ou $-PO(OH)_2$ ou $-SO_3H$.

En particulier, le radical libre stable peut être le 2,2,5,5-tétraméthyl-1-pyrrolidinyloxy commercialisé sous la marque PROXYL ou le 2,2,6,6-tétraméthyl-1-piperidinyloxy, généralement commercialisé sous la dénomination TEMPO.

Le radical libre stable peut également être choisi dans la liste suivante :

- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphono-2,2-diméthyl propyl nitroxyde,
- N-phényl-1-diéthyl phosphono-2,2-diméthyl propyl nitroxyde,
- N-phényl-1-diéthyl phosphono-1-méthyl éthyl nitroxyde,
- N-(1-phényl 2-méthyl propyl)-1 diéthylphosphono-1-méthyl éthyl nitroxyde.

Le radical libre stable peut être introduit dans le milieu de polymérisation ou copolymérisation à raison de 0,005 % à 4 % en mole de la somme du nombre de mole de monomère et de radical libre stable.

De préférence, le rapport molaire du radical libre stable sur l'iniferter va de 0,2 à 5 et de manière encore préférée de 0,5 à 3.

Dans le cadre de la présente invention, tout monomère présentant une double liaison carbone-carbone susceptible de polymériser ou copolymériser par voie radicalaire, peut être utilisé.

Au moins un monomère présent dans le milieu de polymérisation ou copolymérisation peut être un monomère vinylaromatique ou une oléfine ou un diène ou un monomère (méth)acrylique. le monomère peut également être le difluorure de vinylidène ou le chlorure de vinyle.

Par monomère vinylaromatique, on entend le styrène, le styrène substitué, par exemple sur le groupement vinyle par un groupement alkyle tel que l'alphaméthylstyrène, ou substitué sur le cycle comme pour l'ortho-vinyltoluène, le para-vinyltoluène, l'ortho-éthylstyrène, le 2,4-diméthylstyrène, le styrène substitué sur le cycle par un halogène comme par exemple le 2,4-dichlorostyrène ainsi que le vinylanthracène, le chlorométhylstyrène, le paraacétoxystyrène.

Par diène, on entend en particulier un diène conjugué comprenant de 4 à 8 atomes de carbone tel que le 1,3-butadiène, l'isoprène, le 2,3-diméthyl1,3-butadiène, le pipérylène, le chloroprène.

Le terme "monomère (méth)acrylique", tel qu'employé dans la présente description, signifie un monomère choisi parmi les (méth)acrylates de formule respectivement :

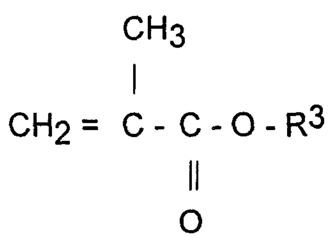

et

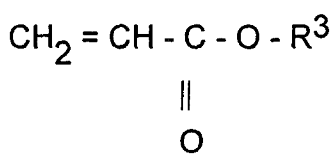

dans laquelle $R^3$ est choisi parmi les radicaux alkyle en $C_1$ - $C_{18}$, linéaires ou ramifiés, primaires, secondaires ou tertiaires, cycloalkyle en $C_5$ - $C_{18}$, (alcoxy en $C_1$ - $C_{18}$)-alkyle en $C_1$ - $C_{18}$, (alkylthio en $C_1$ - $C_{18}$)-alkyle en $C_1$ - $C_{18}$, aryle et arylalkyle, ces radicaux étant éventuellement substitués par au moins un atome d'halogène et/ou au moins un groupe hydroxyle après protection de ce groupe hydroxyle, les groupes alkyle ci-dessus étant linéaires ou ramifiés ;

les (méth)acrylates de glycidyle, de norbornyle, d'isobornyle, le méthacrylonitrile, les mono- et di-(alkyl en $C_1$-$C_{18}$)-(méth)acrylamides.

Comme exemples de méthacrylates de la formule ci-dessus, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxyéthyle, d'hydroxypropyle, d'hydroxybutyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

Si l'on reprend les symboles utilisés pour les réactions (1) à (4) ci-dessus, et si l'on représente le radical libre stable par $E^{\bullet}$, la mise en oeuvre du procédé selon l'invention conduit en cours de polymérisation à la formation d'enchaînements que l'on peut représenter par $A(X)_nE$, n étant un nombre entier non nul. En cours de polymérisation, la chaîne de polymère croit par insertion d'unités de monomère entre les bouts de chaînes A et E. Des unités de monomère différentes peuvent être introduites entre A et E, de façon statistique ou séquencée. Ainsi, X représente une ou plusieurs unités de monomère pouvant être de nature différente.

Suivant la nature de l'unité de monomère, la nature de l'iniferter et la température, il est possible d'insérer l'unité de monomère :

- soit par rupture de la liaison A — X de la chaîne de polymère, une nouvelle liaison A — X se reformant immédiatement après insertion de l'unité entre $A^{\bullet}$ et la nouvelle unité de monomère,
- soit par rupture de la liaison X — E de la chaîne de polymère, une nouvelle liaison X — E se reformant immédiatement après l'insertion de l'unité entre $E^{\bullet}$ et la nouvelle unité de monomère.

L'insertion d'unités de monomère par la liaison A — X est en particulier possible lorsque cette liaison est réversible sous l'effet de la lumière et en particulier d'un rayonnement ultraviolet. Un tel comportement peut être observé lorsque l'iniferter utilisé comprend deux atomes de soufre au niveau de la liaison simple covalente réagissant selon la réaction (1). Dans ce cas, l'insertion d'unité de monomère peut être réalisée entre la liaison S — X, généralement lorsque la température est comprise entre -30°C et 200°C. Ici, l'atome de soufre S appartient au radical A. Ainsi, le procédé selon l'invention peut comprendre au moins une étape de polymérisation ou copolymérisation par voie photochimique. Si l'on souhaite que cette réaction photochimique soit essentiellement la seule réaction de polymérisation ou copolymérisation se déroulant dans le milieu, il convient de choisir des conditions évitant les autres réactions de polymérisation ou copolymérisation, ce qui est généralement observé lorsque la température va de -30°C à 60°C.

Le procédé selon l'invention peut également comprendre au moins une étape de polymérisation ou copolymérisation par voie thermique, c'est-à-dire faisant intervenir la liaison X — E.

Si l'on souhaite que la polymérisation ou copolymérisation s'effectue de façon prépondérante par la liaison X — E, il convient de choisir des conditions évitant les autres réactions de polymérisation ou copolymérisation, ce qui est généralement observé :

- en absence de lumière lorsque la liaison A — X est réversible sous l'effet de la lumière, et
- en absence ou présence de lumière lorsque la liaison A — X n'est pas réversible sous l'effet de la lumière, et
- lorsque la température est suffisante compte tenu du monomère considéré sans qu'elle ne soit si forte que la polymérisation ou copolymérisation spontanée du monomère, c'est-à-dire sans passage par la structure A — $(X)_n$ — E, ne devienne prépondérante.

Par exemple, pour le cas ou X est une unité de monomère vinylaromatique, on est dans ces conditions lorsque la température du milieu est comprise entre 100 et 130°C. Il n'est pas exclu de polymériser ou copolymériser à de plus hautes températures, par exemple jusqu'à 200°C, si l'on préfère une plus grande vitesse de polymérisation au détriment de la polymolécularité.

Le milieu de polymérisation ou copolymérisation peut être destiné à mener à un polymère vinylaromatique choc, auquel cas il comprend généralement au moins un monomère vinylaromatique et un caoutchouc, ce dernier étant généralement un polydiène conjugué tel qu'un ou plusieurs polybutadiènes.

Pour le cas où X est une unité de diène, on est dans ces conditions lorsque la température du milieu est comprise entre 100°C et 200°C.

L'insertion d'unités de monomère par la liaison X — E est particulièrement recommandée pour les monomères vinylaromatique et les diènes.

L'insertion d'unités de monomère par la liaison A — X, c'est-à-dire par la voie photochimique, est particulièrement recommandée pour les monomères (méth)acryliques et plus particulièrement pour les monomères méthacryliques. Il s'agit là d'un avantage essentiel de l'invention par rapport à l'art antérieur tel que représenté par le WO 94/11412, lequel ne propose qu'une voie thermique et n'est pas adapté à la polymérisation ou copolymérisation des monomères méthacryliques.

Le procédé selon l'invention permet la préparation de copolymères à blocs. On peut choisir, en fonction de la nature des monomères, d'insérer les blocs, soit par voie photochimique par le biais de la liaison A — X si celle-ci le permet, soit par voie thermique par le biais de la liaison E — X. On peut bien entendu insérer plusieurs blocs de nature différente par voie thermique et plusieurs blocs de nature différente par voie photochimique. Ainsi, la structure

$A(X)_nE$ offre une grande souplesse d'utilisation et permet par un procédé simple de mise en oeuvre la réalisation de copolymères à blocs (ou séquencés) à la structure complexe.

Le procédé selon l'invention est particulièrement adapté aux polymérisation ou copolymérisation en phase organique, en l'absence de phase aqueuse, comme c'est le cas dans les procédés en masse ou en solution dans un solvant organique.

Bien entendu, suivant les conditions de polymérisation ou copolymérisation, et en particulier la durée, la température, le degré de conversion de monomère en polymère ou copolymère, il est possible de réaliser des produits de masse moléculaire très différente.

L'invention concerne à la fois la préparation d'oligomères, polymères ou copolymères de masse moléculaire moyenne en poids inférieure à 10 000, que celle de polymères ou copolymères de masse moléculaire moyenne en poids supérieure à 10 000, comme les hauts-polymères de masse moléculaire moyenne en poids allant généralement de 100 000 à 400 000. L'obtention de masses moléculaires moyennes en poids supérieures à 10 000 est obtenue lorsque la température et la durée de polymérisation ou copolymérisation sont suffisantes.

L'invention concerne à la fois les procédés de polymérisation ou copolymérisation dont le taux de conversion de monomère en polymère ou copolymère est inférieur à 50 % que ceux dont le taux de conversion de monomère en polymère ou copolymère est supérieur à 50 %. Par exemple, le taux de conversion de monomère en polymère ou copolymère peut dépasser 60 %.

Les caractéristiques suivantes ont été utilisées pour les exemples :

- % de conversion : % de monomère converti en polymère. Il a été déterminé par RMN $^1H$ sur un appareil Bruker 200 MHz avec intégration des pics correspondant au polymère et au monomère.
- Masse moléculaire moyenne en nombre (représenté par Mn) : Chromatographie à perméation de gel (GPC) dans le THF à 30° C, après étalonnage avec des échantillons standards de polystyrène.
- Indice de polymolécularité (représenté par $I_p$) : rapport de la masse moléculaire moyenne en poids sur la masse moléculaire moyenne en nombre, toutes deux mesurées par GPC (voir Mn ci-dessus).

**EXEMPLES 1 A 8**

Dans un ballon en verre de 50 ml sous atmosphère d'azote, muni d'une agitation par barreau magnétique et d'un système de régulation de température, on introduit à température ambiante :

- 50 g de styrène (0,481 mole, soit 8,7 moles par litre), puis
- x moles par litre de ditertiobutylnitroxyde,
- y moles par litre de disulfure de tétraéthylthiurame.

On porte alors le réacteur à 120°C sous agitation. L'instant pour lequel le mélange atteint la température de 120°C est défini comme étant l'instant de départ de l'essai. Le tableau 1 rassemble les résultats en fonction de x et y et de la durée de la polymérisation.

TABLEAU 1

| Exemple n° | x (moles/litre) | y (moles/litre) | Temps (h) | Rendement (%) | Mn | Ip | Distribution de la masse moléculaire |
|---|---|---|---|---|---|---|---|
| 1 (comparatif) | 0 | 0 | 0,25 | 90 | 65 000 | 5 | monomodale |
| 2 (comparatif) | 0,01 | 0 | 10 | 6 | 4 000 | 1,2 | monomodale |
| | | | 23 | 35 | 11000 | 1,5 | |
| | | | 48 | 90 | 23 000 | 1,8 | |
| 3 (comparatif) | 0,02 | 0 | 23 | 22 | 6 500 | 1,5 | monomodale |
| 4 (comparatif) | 0,05 | 0 | 23 | 18 | 4 500 | 1,4 | monomodale |
| 5 (comparatif) | 0 | 0,01 | 10 | 82 | 30 500 | 5,4 | bimodale |
| | | | 23 | 90 | 30 000 | 5,5 | |
| 6 (comparatif) | 0 | 0,03 | 10 | 87 | 15 200 | 6,8 | bimodale |
| | | | 23 | 92 | 14 500 | 7,0 | |

TABLEAU 1 (suite)

| Exemple n° | x (moles/litre) | y (moles/litre) | Temps (h) | Rendement (%) | Mn | Ip | Distribution de la masse moléculaire |
|---|---|---|---|---|---|---|---|
| 7 | 0,02 | 0,01 | 10<br>23 | 40<br>80 | 11200<br>28 000 | 1,5<br>1,5 | monomodale |
| 8 | 0,03 | 0,01 | 10<br>23 | 25<br>70 | 13 500<br>40 000 | 1,5<br>1,5 | monomodale |

**EXEMPLE 9**

a) Formation d'un bloc de polystyrène:

On place sous argon et à la température ambiante dans un ballon en verre de 50 ml muni d'un barreau magnétique :

- 10 g de styrène ($9,6.10^{-2}$ mole),
- 0,144 g de di-tertiobutylnitroxyde($1.10^{-3}$ mole),
- 0,15 g de disulfure de tetraéthylthiurame ($5.10^{-4}$ mole),

puis l'on porte la température du ballon à 120°C pendant 20 heures et sous agitation, puis on fait revenir le milieu réactionnel à la température ambiante.

Le polystyrène obtenu est précipité au méthanol pour analyse. On obtient 8,4 g de polystyrène, lequel présente un Mn de 37000 et un Ip de 1,6.

b) Formation d'un copolymère comprenant un bloc de polystyrène et un bloc de polyméthacrylate de méthyle :

On solubilise sous argon dans un tube en verre 0,5 g du polystyrène préparé en a) dans 2 g de méthacrylate de méthyle (MAM). Le mélange réactionnel est placé à environ 15 cm d'une lampe UV de marque Philips HPK 125 W 4A pendant 6 heures à 30°C. Le copolymère obtenu est précipité dans le méthanol. On a obtenu 2,1 g de copolymère. On cherche a reprécipiter le copolymère dans le $CCl_4$, mais aucun précipité ne se forme, ce qui prouve l'absence d'homopolymère de polyméthacrylate de méthyle. Le copolymère obtenu présente un Mn de 120 000 et un Ip de 2,3.

**EXEMPLE 10** (comparatif)

On solubilise 1 g du polystyrène préparé à l'exemple 9a) dans 5 g de méthacrylate de méthyle dans un réacteur en verre. Le mélange, après avoir été placé sous atmosphère inerte est chauffé à 120°C pendant 70 heures en vase clos et à l'abri de la lumière. Après précipitation au méthanol, on constate par GPC et RMN $^1H$ que lors du chauffage de 70 heures à l'abri de la lumière, aucune polymérisation ni copolymérisation ne s'est produite.

**EXEMPLE 11** (comparatif)

On procède comme pour l'exemple 9 sauf que l'on remplace le disulfure de tétraéthylthiurame par le même nombre de mole de peroxyde de benzoyle (0,12 g).

On constate que lors de l'étape b), aucune polymérisation ou copolymérisation ne s'est produite.

**EXEMPLE 12** (comparatif)

On procède comme pour l'exemple 11 sauf que l'on n'utilise aucun UV et sauf que l'on chauffe le mélange réactionnel pendant 6 heures à 130°C lors de l'étape b). On constate que lors de l'étape b), aucune polymérisation ou copolymérisation ne s'est produite.

## Revendications

1. Procédé comprenant au moins une étape de polymérisation ou copolymérisation d'au moins un monomère polymérisable ou copolymérisable par voie radicalaire en présence d'un radical libre stable et d'un iniferter.

2. Procédé selon la revendication 1 caractérisé en ce que l'iniferter peut se scinder en deux radicaux libres sous l'effet d'un rayonnement ultraviolet.

3. Procédé selon la revendication 1 ou 2 caractérisé en ce qu'il comprend au moins une étape de polymérisation ou copolymérisation par voie photochimique.

4. Procédé selon la revendication 3 caractérisé en ce que l'étape par voie photochimique est menée à une température allant de -30 à 60°C.

5. Procédé selon l'une des revendications 1 à 4 caractérisé en ce qu'il comprend au moins une étape de polymérisation ou copolymérisation par voie thermique.

6. Procédé selon l'une des revendications 1 à 5 caractérisé en ce que le taux de conversion de monomère en polymère ou copolymère est supérieur à 50 %.

7. Procédé selon l'une des revendications 1 à 6 caractérisé en ce que la température et la durée sont suffisantes pour obtenir un polymère ou copolymère de masse moléculaire moyenne en poids supérieure à 10 000.

8. Procédé selon l'une des revendications 1 à 7 caractérisé en ce que l'iniferter peut être représenté par la formule

$$R^1—S—S—R^2$$

dans laquelle les groupements R1 et R2 pouvant être identiques ou différents représentent des radicaux comprenant au moins un atome de carbone.

9. Procédé selon la revendication 8 caractérisé en ce que R1 et R2 sont choisis parmi les radicaux alkyles, aryles, aralkyles, alkylaryles, thiurames, xanthates, carbamoyles.

10. Procédé selon la revendication 9 caractérisé en ce que l'iniferter est le disulfure de tétraéthylthiurame ou le disulfure de tétraméthylthiurame.

11. Procédé selon l'une des revendications 1 à 10 caractérisé en ce que l'iniferter est introduit dans le milieu de polymérisation ou copolymérisation à raison de 0,001 % à 15 % en mole de la somme du nombre de moles de monomère et d'iniferter.

12. Procédé selon l'une des revendications 1 à 11 caractérisé en ce que le radical libre stable comprend le groupement $= N — O^•$.

13. Procédé selon l'une des revendications 1 à 12 caractérisé en ce que le rapport molaire du radical libre stable sur l'iniferter va de 0,2 à 5 et de manière préférée de 0,5 à 3.

14. Procédé selon l'une des revendications 1 à 13 caractérisé en ce que au moins un monomère est un monomère vinylaromatique.

15. Procédé selon l'une des revendications 1 à 14 caractérisé en ce que au moins un monomère est un diène.

16. Procédé selon l'une des revendications 1 à 15 caractérisé en ce que au moins un monomère est choisi parmi les acrylates ou méthacrylates.

17. Produit pouvant être représenté par la formule $A — (X)_n — E$ dans laquelle A représente un radical issu d'un iniferter, X représente une ou plusieurs unités de monomère pouvant être de nature différente, n représente un nombre entier non nul, E représente un radical issu d'un radical libre stable, caractérisé en ce que le radical A est

relié à une unité X par l'intermédiaire d'un atome de soufre.

**18.** Produit selon la revendication 17 caractérisée en ce que A — peut être représenté par la formule $R^1$ — S — dans laquelle $R^1$ est choisi parmi les radicaux alkyles, aryles, aralkyles, alkylaryles, thiurames, xanthates, carbamoyles.

**19.** Produit selon la revendication 17 ou 18 caractérisé en ce que X représente au moins une unité de monomère vinylaromatique.

**20.** Produit selon l'une des revendications 17 à 19 caractérisé en ce que X représente au moins une unité de monomère (méth)acrylique.

**21.** Produit selon l'une des revendications 17 à 20 caractérisé en ce que E représente un radical issu d'un nitroxyde.

## Claims

**1.** Process comprising at least one stage of polymerization or copolymerization of at least one monomer which can be polymerized or copolymerized by the radical route in the presence of a stable free radical and of an iniferter.

**2.** Process according to Claim 1, characterized in that the iniferter can split into two free radicals under the effect of ultraviolet radiation.

**3.** Process according to Claim 1 or 2, characterized in that it comprises at least one stage of polymerization or copolymerization by the photochemical route.

**4.** Process according to Claim 3, characterized in that the stage by the photochemical route is carried out at a temperature ranging from -30 to 60°C.

**5.** Process according to one of Claims 1 to 4, characterized in that it comprises at least one stage of polymerization or copolymerization by the thermal route.

**6.** Process according to one of Claims 1 to 5, characterized in that the degree of conversion of monomer to polymer or copolymer is greater than 50%.

**7.** Process according to one of Claims 1 to 6, characterized in that the temperature and the duration are sufficient to obtain a polymer or copolymer with a weight-average molecular mass of greater than 10,000.

**8.** Process according to one of Claims 1 to 7, characterized in that the iniferter can be represented by the formula

$$R^1—S—S—R^2$$

in which the $R^1$ and $R^2$ groups, which can be identical or different, represent radicals comprising at least one carbon atom.

**9.** Process according to Claim 8, characterized in that $R^1$ and $R^2$ are chosen from alkyl, aryl, aralkyl, alkylaryl, thiuram, xanthate and carbamoyl radicals.

**10.** Process according to Claim 9, characterized in that the iniferter is tetraethylthiuram disulphide or tetramethylthiuram disulphide.

**11.** Process according to one of Claims 1 to 10, characterized in that the iniferter is introduced into the polymerization or copolymerization mixture in the proportion of 0.001mol% to 15mol% of the sum of the number of moles of monomer and of iniferter.

**12.** Process according to one of Claims 1 to 11, characterized in that the stable free radical comprises the group $=N\text{-}O^\bullet$.

**13.** Process according to one of Claims 1 to 12, characterized in that the molar ratio of the stable free radical to the

iniferter ranges from 0.2 to 5 and in a more preferred way from 0.5 to 3.

**14.** Process according to one of Claims 1 to 13, characterized in that at least one monomer is a vinylaromatic monomer.

**15.** Process according to one of Claims 1 to 14, characterized in that at least one monomer is a diene.

**16.** Process according to one of Claims 1 to 15, characterized in that at least one monomer is chosen from acrylates or methacrylates.

**17.** Product which can be represented by the formula $A—(X)_n—E$, in which A represents a radical resulting from an iniferter, X represents one or more monomer units which can be different in nature, n represents a non-zero integer and E represents a radical resulting from a stable free radical, characterized in that the radical A is connected to a unit X via a sulphur atom.

**18.** Product according to Claim 17, characterized in that A- can be represented by the formula $R^1—S—$, in which $R^1$ is chosen from alkyl, aryl, aralkyl, alkylaryl, thiuram, xanthate and carbamoyl radicals.

**19.** Product according to Claim 17 or 18, characterized in that X represents at least one vinylaromatic monomer unit.

**20.** Product according to one of Claims 17 to 19, characterized in that X represents at least one (meth)acrylic monomer unit.

**21.** Product according to one of Claims 17 to 20, characterized in that E represents a radical resulting from a nitroxide.

**Patentansprüche**

**1.** Verfahren mit mindestens einem Schritt der Polymerisation oder Copolymerisation mindestens eines polymerisierbaren oder copolymerisierbaren Monomeren auf radikalartikem Wege in Gegenwart eines stabilen freien Radikals und eines Iniferters.

**2.** Verfahren nach Anspruch 1, dadurch gekennzeichnet, daß sich der Iniferter in zwei freie Radikale unter Einwirkung von ultravioletter Strahlung zerteilen kann.

**3.** Verfahren nach Anspruch 1 oder 2, dadurch gekennzeichnet, daß es mindestens einen Schritt der Polymerisation oder Copolymerisation auf photochemischem Wege umfaßt.

**4.** Verfahren nach Anspruch 3, dadurch gekennzeichnet, daß der photochemische Schritt bei einer Temperatur von -30 bis 60 °C durchgeführt wird.

**5.** Verfahren nach einem der Ansprüche 1 bis 4, dadurch gekennzeichnet, daß er mindestens einen Schritt der Polymerisation oder Copolymerisation auf thermischem Wege umfaßt.

**6.** Verfahren nach einem der Ansprüche 1 bis 5, dadurch gekennzeichnet, daß der Umwandlungsgrad der Monomeren in Polymere oder Copolymere größer als 50 % ist.

**7.** Verfahren nach einem der Ansprüche 1 bis 6, dadurch gekennzeichnet, daß die Temperatur und die Dauer ausreichend sind, um ein Polymeres oder Copolymeres mit einer mittleren gewichtsbezogenen Molekularmasse von mehr als 10.000 zu erhalten.

**8.** Verfahren nach einem der Ansprüche 1 bis 7, dadurch gekennzeichnet, daß der Iniferter dargestellt werden kann durch die Formel

$$R^1\text{-S-S-}R^2$$

in der die Gruppen $R^1$ und $R^2$, die gleich oder verschieden sein können, Reste mit mindestens einem Kohlenstoffatom bedeuten.

**9.** Verfahren nach Anspruch 8, dadurch gekennzeichnet, daß $R^1$ und $R^2$ aus den Alkyl-, Aryl-, Aralkyl-, Alkylaryl-, Thiuram, Xanthat-, Carbamoylresten gewählt sind.

**10.** Verfahren nach Anspruch 9, dadurch gekennzeichnet, daß der Iniferter Tetraethylthiuramdisulfid oder Tetramethylthiuramdisulfid ist.

**11.** Verfahren nach einem der Ansprüche 1 bis 10, dadurch gekennzeichnet, daß der Iniferter in das Polymerisations- oder Copolymerisationsmilieu in einer Menge von 0,001 Mol-% bis 15 Mol-% der Summe der Molanzahl des Monomeren und des Iniferters zugegeben wird.

**12.** Verfahren nach einem der Ansprüche 1 bis 11, dadurch gekennzeichnet, daß das stabile freie Radikal die Gruppe $=N-O^{\bullet}$ aufweist.

**13.** Verfahren nach einem der Ansprüche 1 bis 12, dadurch gekennzeichnet, daß das Molverhältnis des stabilen freien Radikals zum Iniferter von 0,2 bis 5 und vorzugsweise von 0,5 bis 3 reicht.

**14.** Verfahren nach einem der Ansprüche 1 bis 13, dadurch gekennzeichnet, daß mindestens ein Monomeres ein vinylaromatisches Monomeres ist.

**15.** Verfahren nach einem der Ansprüche 1 bis 14, dadurch gekennzeichnet, daß mindestens ein Monomeres ein Dien ist.

**16.** Verfahren nach einem der Ansprüche 1 bis 15, dadurch gekennzeichnet, daß mindestens ein Monomeres aus den Acrylaten oder Methacrylaten gewählt ist.

**17.** Produkt, das durch die Formel $A-(X)_n-E$ dargestellt werden kann, in der A einen aus dem Iniferter hervorgegangenen Rest, X eine oder mehrere Monomereinheiten, die unterschiedlicher Natur sein können, n eine ganze Zahl, die nicht null ist, und E einen aus einem stabilen freien Radikal hervorgegangenen Rest bedeutet, dadurch gekennzeichnet, daß der Rest A an eine Einheit X mit Hilfe eines Schwefelatoms gebunden ist.

**18.** Produkt nach Anspruch 17, dadurch gekennzeichnet, daß A- durch die Formel $R^1$-S- dargestellt werden kann, in der $R^1$ aus den Alkyl-, Aryl-, Aralkyl-, Alkylaryl-, Thiuram-, Xanthat-, Carbamoylresten gewählt ist.

**19.** Produkt nach Anspruch 17 oder 18, dadurch gekennzeichnet, daß X mindestens eine vinylaromatische Monomereinheit bedeutet.

**20.** Produkt nach einem der Ansprüche 17 bis 19, dadurch gekennzeichnet, daß X mindestens eine (Meth)acrylmonomereinheit bedeutet.

**21.** Produkt nach einem der Ansprüche 17 bis 20, dadurch gekennzeichnet, daß E einen aus einem Nitroxid hervorgegangen Rest bedeutet.